# EUROPÄISCHE PATENTSCHRIFT

(11) **EP 1 628 932 B1**
(45) Veröffentlichungstag und Bekanntmachung des Hinweises auf die Patenterteilung: **26.09.2007**
(21) Anmeldenummer: 04732614.5
(22) Anmeldetag: 13.05.2004
(51) Int. Cl.: C04B 24/08

(54) **HYDROPHOBIERENDES ADDITIV**
HYDROPHOBING ADDITIVE
ADDITIF HYDROPHOBANT

(30) Priorität: 22.05.2003 DE 10323205
(43) Veröffentlichungstag der Anmeldung: 01.03.2006
(73) Patentinhaber: Wacker Polymer Systems GmbH & Co. KG, 84489 Burghausen (DE)
(72) Erfinder: BASTELBERGER, Thomas, 84547 Emmerting (DE); HÄRZSCHEL, Reinhard, 84489 Burghausen (DE); JODLBAUER, Franz, 84533 Marktl (DE)
(74) Vertreter: Schuderer, Michael
(86) Internationale Anmeldenummer: PCT/EP2004/005154
(87) Internationale Veröffentlichungsnummer: WO 2004/103928

(56) Entgegenhaltungen:
- EP-A- 0 228 657
- EP-A- 0 342 609
- EP-A- 0 765 899
- EP-A- 1 193 287
- WO-A-02/30846
- WO-A-02/30847
- WO-A-02/31036
- WO-A-95/20627
- DE-A- 2 341 085

## Beschreibung

Die Erfindung betrifft ein hydrophobierendes, in Wasser redispergierbares Additiv auf Basis von Fettsäuren sowie deren Derivate und gegebenenfalls Organosiliciumverbindungen, Verfahren zu deren Herstellung, und deren Verwendung.

Bei kalk- oder zementgebundenen Baustoffen wie Putzen, Spachtelmassen und Bauklebern besteht die Notwendigkeit diese vor Witterungseinflüssen zu schützen. Bei Regen oder Schnee werden die Baustoffe, beispielsweise der Außenputz, bedingt durch deren Kapillaraktivität durchfeuchtet, was zu irreversiblen Schäden an der Bausubstanz führen kann. Um dies zu verhindern ist es schon lange gängige Praxis, die Baustoffe zu hydrophobieren.

Aus der DE-A 2341085, der EP-A 342609 und der EP-A 717016 ist bekannt, den kalk- oder zementgebundenen Putzen Fettsäureester als Hydrophobierungsmittel zuzugeben. Nachteilig ist dabei oft gerade der hydrophobierende Charakter dieser Zusatzstoffe. Werden Trockenputze, welche solche Hydrophobierungsmittel enthalten, mit Wasser angerührt, führt dies dazu, dass sich die Materialien nur mehr schlecht benetzen, und deshalb die Verarbeitbarkeit deutlich verschlechtert wird.

In Wasser redispergierbare Pulver auf der Basis von Homo- oder Copolymerisaten von ethylenisch ungesättigten Monomeren werden im Baubereich als Bindemittel, in Kombination mit hydraulisch abbindenden Bindemitteln wie Zement, eingesetzt. Beispielsweise dienen diese in Bauklebern, Putzen, Mörteln und Farben der Verbesserung der mechanischen Festigkeit und der Haftung. Aus der WO-A 95/20627, der WO-A 02/31036 und der DE-A 10233933 ist bekannt, hydrophobierend wirkende Additive wie Organosiliciumverbindungen und Fettsäureester als Bestandteil von Redispersionspulvern in Trockenmörteln einzusetzen. Damit wird die Problematik der schlechten Benetzbarkeit und Verarbeitbarkeit umgangen. Der hydrophobierende Effekt ist aber abhängig von dem Anteil des Hydrophobierungsmittels im Redispersionspulver und kann daher nicht beliebig variiert werden.

In der EP-A 1193287 werden Pulverzusammensetzungen mit mindestens einem Fettsäureester zur Hydrophobierung von Baustoffmassen empfohlen. Dazu wird der Fettsäureester wie eben beschrieben als Bestandteil eines redispergierbaren Polymerpulvers appliziert, mit den gerade beschriebenen Nachteilen. In einer weiteren Ausführungsform wird vorgeschlagen, das Hydrophobierungsmittel als Trockensubstanz, aufgetragen auf einem inerten, anorganischen Trägermaterial, beispielsweise Kieselsäure, einzusetzen. Nachteilig ist dabei, dass damit Inertsubstanz in die Baustoffmasse eingetragen wird, was zur Beeinträchtigung deren mechanischen Festigkeit beitragen kann.

WO 02/30847 offenbart ein verzögert freigesetztes, hydrophobierendes Additiv aus 10-45 Gew.-% einer wasserlöslichen, film-formenden Komponente wie Polyvinylalkohol oder einer Mischung derselben mit einem Fettsäureester im Gemisch mit 5-30 Gew.-% eines Organo-Siloxans und einer pulverförmigen Komponente wie Calcium Carbonat.

Es bestand daher die Aufgabe, ein hydrophobierendes Additiv für Baustoffmassen zur Verfügung zu stellen, welches sich als Bestandteil einer Trockenmörtelformulierung ohne die genannten Schwierigkeiten verarbeiten läßt, welches sich unabhängig von anderen Bestandteilen der Formulierung dosieren läßt, und welches die mechanische Festigkeit nicht durch Eintragen von Inertsubstanz reduziert.

Gegenstand der Erfindung ist ein hydrophobierendes, in Wasser redispergierbares Additiv auf Basis von Fettsäuren sowie deren Derivaten enthaltend
a) 30 bis 95 Gew.-% ein oder mehrere, wasserlösliche Schutzkolloide,
b) 5 bis 70 Gew.-% ein oder mehrere Verbindungen aus der Gruppe umfassend
   b1) Fettsäuren und Fettsäurederivate, die unter alkalischen Bedingungen Fettsäure oder das entsprechende Fettsäureanion freisetzen gegebenenfalls in Kombination mit
   b2) einer oder mehreren Organosilicium-Verbindungen, und
c) 0 bis 30 Gew.-% Antiblockmittel,
wobei die Angaben in Gew.-% auf das Gesamtgewicht des Additivs bezogen sind, und sich auf 100 Gew.-% aufaddieren.

Als Komponente b1) geeignet sind allgemein Fettsäuren und Fettsäurederivate, die unter alkalischen Bedingungen, vorzugsweise pH > 8, Fettsäure bzw. das entsprechende Fettsäureanion freisetzen. Bevorzugt werden Fettsäureverbindungen aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure) .

Geeignete Metallseifen sind die der obengenannten Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Bevorzugt werden Metallseifen mit Lithium, Natrium, Kalium, Magnesium, Calcium, Aluminium, Zink, und den Ammoniumverbindungen.

Geeignete Fettsäureamide sind die mit Mono- oder Diethanolamin und den obengenannten C₈- bis C₂₂-Fettsäuren erhältlichen Fettsäureamide.

Als Komponente b1) geeignete Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester.
Geeignete Fettsäureester sind auch die Mono-, Di- und Polyglykolester der C₈- bis C₂₂-Fettsäuren.
Weitere geeignete Fettsäureester sind die Mono- und Diester von Polyglykolen und/oder Polyalkylenglykolen mit bis zu 20 Oxyalkylen-Einheiten, wie Polyethylenglykol und Polypropylenglykol.
Geeignet sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren.
Geeignet sind auch die Fettsäureester von Sorbit und Mannit.

Besonders bevorzugt sind die C₁- bis C₁₄-Alkylester und -Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Die genannten Fettsäuren und Fettsäurederivate können allein oder im Gemisch eingesetzt werden. Im allgemeinen wird die Komponente b1) in einer Menge von 5 bis 70 Gew.-%, vorzugsweise 10 bis 40 Gew.-%, jeweils bezogen auf das Gesamtgewicht des hydrophobierenden Additivs, eingesetzt.

Gegebenenfalls können die genannten Fettsäuren und Fettsäurederivate mit Organosiliciumverbindungen b2) eingesetzt werden. Geeignete Organosiliciumverbindungen sind Kieselsäureester Si(OR')₄, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si(SiR₂)ₙSiR₃ mit n = 0 bis 500, Organosilanole SiRₙ(OH)₄₋ₙ, Di-, Oligo- und Polsiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei jeweils R gleich oder verschieden ist und verzweigte oder unverzweigte. Alkylreste mit 1 bis 22 C-Atomen, Cycloalkylreste mit 3 bis 10 C-Atomen, Alkenylreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann. Geeignet sind auch Carbosilane, Polycarbosilane, Carbosiloxane, Polycarbosiloxane, Polysilylendisiloxane

Bevorzugt als Komponente b2) sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri-(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan- und Methylhydrogensiloxan-Einheiten, Dimethylpolysiloxane, sowie Dimethylpolsiloxane mit Si-OH-Gruppen in den endständigen Einheiten. Am meisten bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan.

Die Organosiliciumverbindungen b2) können allein und im Gemisch eingesetzt werden. Vorzugsweise wird die Komponente b2) in einer Menge von 0.1 bis 20 Gew.-%, besonders bevorzugt 1 bis 10 Gew.-%, jeweils bezogen auf das Gesamtgewicht des hydrophobierenden Additivs, eingesetzt.Die Herstellung der genannten Organosiliciumverbindungen kann nach Verfahren erfolgen wie sie in Noll, Chemie und Technologie der Silicone, 2. Auflage 1968, Weinheim, und in Houben-Weyl, Methoden der organischen Chemie, Band E20, Georg Thieme Verlag, Stuttgart (1987) beschrieben sind.

Geeignete Schutzkolloide sind teilverseifte und vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas, vorzugsweise 3 bis 15 mPas (Methode nach Höppler bei 20°C, DIN 53015).

Bevorzugt sind auch teilverseifte oder vollverseifte, hydrophob modifizierte Polyvinylalkohole mit einem Hydrolysegrad von 80 bis 100 Mol-% und einer Höpplerviskosität, in 4 %-iger wässriger Lösung, von 1 bis 30 mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethen, Propen und Decen. Der Anteil der hydrophoben Einheiten beträgt vorzugsweise 0.1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol-%. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015) sowie teilverseifte oder vollverseifte Copolymerisate von Vinylacetat mit Isopropenylacetat mit einem Hydrolysegrad von 95 bis 100 Mol-%. Die genannten Polyvinylalkohole sind mittels dem Fachmann bekannter Verfahren zugänglich.

Zur Herstellung der hydrophobierenden Additive wird die Komponente b) in eine wässrige Lösung des Schutzkolloids a) eingerührt und getrocknet, beispielsweise mittels Wirbelschichttrocknung, Dünnschichttrocknung (Walzentrocknung), Gefriertrocknung oder Sprühtrocknung. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Die Gesamtmenge an Schutzkolloid soll 30 bis 95 Gew.-%, bezogen auf das Gesamtgewicht des hydrophobierenden Additivs betragen; bevorzugt werden 40 bis 70 Gew.-%, bezogen auf das Gesamtgewicht des hydrophobierenden Additivs, eingesetzt.

Bei der Verdüsung hat sich vielfach ein Gehalt von bis zu 1.5 Gew.-% Antischaummittel, bezogen auf den Anteil der Komponente b), als günstig erwiesen. Zur Erhöhung der Lagerfähigkeit durch Verbesserung der Verblockungsstabilität kann mit einem Antiblockmittel (Antibackmittel), vorzugsweise 1 bis 30 Gew.-%, bezogen auf das Gesamtgewicht des hydrophoben Additivs, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die hydrophobierenden Additive können in vielfältigen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement) oder Wasserglas, oder in Gips-haltigen Massen, Kalk-haltigen Massen, oder zementfreien und Kunststoff-gebundenen Massen, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Im allgemeinen wird das hydrophobierende Additiv in einer Menge von 0.1 bis 10 Gew.-%, bezogen auf das Gesamtgewicht der zu hydrophobierenden Rezeptur (ohne Wasseranteil), eingesetzt.

Besonders vorteilhaft ist der Einsatz der hydrophobierenden Additive in den obengenannten Anwendungsbereichen in Kombination mit in Wasser redispergierbaren Polymerpulvern. Als in Wasser redispergierbare Polymerpulver werden solche bezeichnet, die in Wasser wieder in die Primärteilchen zerfallen, welche dann im Wasser dispergiert werden. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide. Es können auch Gemische der genannten Polymere eingesetzt werden. Vorzugsweise werden in den genannten Anwendungen 1 bis 50 Gew.-%, bezogen auf das Gesamtgewicht der Rezeptur (ohne Wasseranteil), in Wasser redispergierbare Polymerpulver eingesetzt.

Bevorzugte Vinylester sind Vinylacetat, Vinylpropionat, Vinylbutyrat, Vinyl-2-Ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R}, VeoVa9^{R} , VeoVa10^{R} oder VeoVa11^{R} (Handelsname der Fa. Shell). Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können die Polymerisate noch 0.1 bis 10 Gew.-%, bezogen auf das Gesamtgewicht des Polymerisats, funktionelle Comonomereinheiten enthalten aus der Gruppe der ethylenisch ungesättigten Mono- oder Dicarbonsäuren wie Acrylsäure; der ethylenisch ungesättigten Carbonsäureamide wie (Meth)Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol-(meth)acrylamide sowie deren Ether wie Isobutoxy- oder n-Butoxyether.

Als Polymerisate werden die nachstehend aufgeführten besonders bevorzugt, wobei sich die Angaben in Gewichtsprozent, gegebenenfalls mit dem Anteil an funktionellen Comonomereinheiten, auf 100 Gew.-% aufaddieren:
Aus der Gruppe der Vinylester-Polymerisate Vinylacetat-Polymerisate, Vinylacetat-Ethylen-Copolymere mit einem Ethylengehalt von 1 bis 60 Gew.-%; Vinylester-Ethylen-Vinylchlorid-Copolymere mit einem Ethylengehalt von 1 bis 40 Gew.-% und einem Vinylchlorid-Gehalt von 20 bis 90 Gew.-%; VinylacetatCopolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.

Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat, Copolymerisate von Methylmethacrylat mit 1,3-Butadien.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylsäureester-Copolymere.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.

Die Herstellung der Polymerisate erfolgt in an sich bekannter Weise, vorzugsweise nach dem Emulsionspolymerisationsverfahren. Es können sowohl mit Emulgator stabilisierte Dispersionen eingesetzt werden, als auch mit Schutzkolloid, beispielsweise Polyvinylalkohol, stabilisierte. Zur Herstellung der in Wasser redispergierbaren Polymerpulver wird die dadurch erhältliche Polymerdispersion getrocknet. Die Trocknung kann mittels Sprühtrocknung, Gefriertrocknung oder durch Koagulation der Dispersion und anschließender Wirbelschichttrocknung erfolgen. Bevorzugt wird die Sprühtrocknung.

Mit den hydrophobierenden Additiven werden Hydrophobierungsmittel zur Verfügung gestellt, welche sich unabhängig von anderen Formulierungsbestandteilen dosieren lassen. Aufgrund der redispergierbaren Ausstattung des Additivs werden die bis dato auftretenden Probleme bei der Verarbeitung von hydrophoben Zusätzen vermieden. Vorteilhaft ist auch der Schutzkolloidanteil, da insbesondere Polyvinylalkohol auch als Bindemittel wirkt und damit zur Verbesserung der mechanischen Festigkeit von Baustoffen beiträgt.

Die nachfolgenden Beispiele dienen der weiteren Erläuterung der Erfindung:

### Beispiel 1:

10 Gew.-Teile Laurinsäuremethylester wurden mit einem Gemisch aus 10 Gew.-Teilen einer 30 Gew.-%-igen, wässrigen Lösung eines Polyvinylalkohols mit einer Höppler-Viskosität von 13 mPas und einem Hydrolysegrad von 88 Mol-% sowie 90 Gew.-Teilen einer 30 Gew.-%-igen, wässrigen Lösung eines Polyvinylalkohols mit einer Höppler-Viskosität von 4 mPas und einem Hydrolysegrad von 88 Mol-% vermischt und mit einer Zweistoffdüse verdüst. Das trockene Pulver wurde mit 15 Gew.-Teilen eines Antiblockmittels auf Basis Calcium-Magnesium-Carbonat abgemischt.

### Beispiel 2:

10 Gew.-Teile Laurinsäuremonoglykolester und 5 Gew.-Teile Isooctyltriethoxysilan wurden mit einem Gemisch aus 10 Gew.-Teilen einer 30 Gew.-%-igen, wässrigen Lösung eines Polyvinylalkohols mit einer Höppler-Viskosität von 13 mPas und einem Hydrolysegrad von 88 Mol-% sowie 90 Gew.-Teilen einer 30 Gew.-%-igen, wässrigen Lösung eines Polyvinylalkohols mit einer Höppler-Viskosität von 4 mPas und einem Hydrolysegrad von 88 Mol-% vermischt und mit einer Zweistoffdüse verdüst. Das trockene Pulver wurde mit 15 Gew.-Teilen eines Antiblockmittels auf Basis Calcium-Magnesium-Carbonat abgemischt.

### Beispiel 3:

20 Gew.-Teile Propylenglykoldilaurat wurden mit 100 Gew.-Teilen einer 30 Gew.-%-igen, wässrigen Lösung eines Polyvinylalkohols mit einer Höppler-Viskosität von 4 mPas und einem Hydrolysegrad von 88 Mol-% vermischt und mit einer Zweistoffdüse verdüst. Das trockene Pulver wurde mit 15 Gew.-Teilen eines Antiblockmittels auf Basis Calcium-Magnesium-Carbonat abgemischt.

### Vergleichsbeispiel 4:

100 Gew.-Teile einer 30 Gew.-%-igen, wässrigen Lösung eines Polyvinylalkohols mit einer Höppler-Viskosität von 4 mPas und einem Hydrolysegrad von 88 Mol-% wurden mit einer Zweistoffdüse verdüst. Das trockene Pulver wurde mit 15 Gew.-Teilen eines Antiblockmittels auf Basis Calcium-Magnesium-Carbonat abgemischt.

### Anwendungstechnische Prüfung:

Die hydrophobierende Wirkung der genannten Substanzen wurde mit einem Trockenmörtel mit folgender Zusammensetzung ermittelt:

| | | |
|---|---|---|
| 280.0 | Gew.Teile | Dyckerhoff Weißzement |
| 500.0 | Gew.Teile | Quarzsand (0.1 - 0.4 mm) |
| 190.0 | Gew.Teile | Juraperle MHS |
| 1.5 | Gew.Teile | Tylose MH 10001 P4 |
| 4 | Gew.Teile | Hydrophobierungsmittel |
| 24 | Gew.Teile | Wasser auf 100 Gew.Teile Trockenmischung |

### Prüfung der Wasseraufnahme:

Eine 4 mm dicke Mörtelschicht wurde auf Porenbeton aufgespachtelt wird. Die Proben wurden an den Seitenrändern abgedichtet und mit der Mörtelschicht nach unten ins Wasser eingetaucht. Aus der Gewichtszunahme pro Quadratmeter und der Zeit wurde dann die Wasseraufnahme in kg/m²h^{0,5} ermittelt.

**Tabelle 1 :**

| Bsp. 1 | Bsp. 2 | Bsp. 3 | V.Bsp. 4 |
|---|---|---|---|
| 0.5 | 0.05 | 0.34 | 1.8 |

## Patentansprüche

1. Hydrophobierendes, in Wasser redispergierbares Additiv auf Basis von Fettsäuren sowie deren Derivate enthaltend
a) 30 bis 95 Gew.-% ein oder mehrere, wasserlösliche Schutzkolloide,
b) 5 bis 70 Gew.-% ein oder mehrere Verbindungen aus der Gruppe umfassend
b1) Fettsäuren und Fettsäurederivate, die unter alkalischen Bedingungen Fettsäure oder das entsprechende Fettsäureanion freisetzen,
gegebenenfalls in Kombination mit
b2) einer oder mehreren Organosilicium-Verbindungen, und
c) 0 bis 30 Gew.-% Antiblockmittel,
wobei die Angaben in Gew.-% auf das Gesamtgewicht des Additivs bezogen sind, und sich auf 100 Gew.-% aufaddieren, **dadurch gekennzeichnet, dass** das Additiv erhalten wird, indem die Komponente b) in eine wässrige Lösung des Schutzkolloids a) eingerührt und diese anschließend getrocknet wird.

2. Hydrophobierendes, in Wasser redispergierbares Additiv nach Anspruch 1, **dadurch gekennzeichnet, dass** als Komponente b1) ein oder mehrere enthalten sind, aus der Gruppe umfassend Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

3. Hydrophobierendes, in Wasser redispergierbares Additiv nach Anspruch 1 oder 2, **dadurch gekennzeichnet, dass** als Komponente b1) ein oder mehrere Fettsäureester enthalten sind, aus der Gruppe umfassend
die C₁- bis C₁₄-Alkylester und -Alkylarylester von verzweigten und unverzweigten, gesättigten und ungesättigten Fettsäuren mit jeweils 8 bis 22 C-Atomen,
die Mono-, Di- und Polyglykolester von verzweigten und unverzweigten, gesättigten und ungesättigten Fettsäuren mit jeweils 8 bis 22 C-Atomen,
die Mono- und Diester von Polyglykolen und/oder Polyalkylenglykolen mit bis zu 20 Oxyalkylen-Einheiten mit verzweigten und unverzweigten, gesättigten und ungesättigten Fettsäuren mit jeweils 8 bis 22 C-Atomen,
die Mono-, Di- und Tri-Fettsäureester des Glycerins mit verzweigten und unverzweigten, gesättigten und ungesättigten Fettsäuren mit jeweils 8 bis 22 C-Atomen,
die Mono-, Di- und Tri-Fettsäureester von Mono-, Di- und Triethanolamin mit verzweigten und unverzweigten, gesättigten und ungesättigten Fettsäuren mit jeweils 8 bis 22 C-Atomen,
die Fettsäureester von Sorbit und Mannit mit verzweigten und unverzweigten, gesättigten und ungesättigten Fettsäuren mit jeweils 8 bis 22 C-Atomen.

4. Hydrophobierendes, in Wasser redispergierbares Additiv nach Anspruch 1 bis 3, **dadurch gekennzeichnet, dass** als Komponente b2) ein oder mehrere Organosiliciumverbindungen enthalten sind, aus der Gruppe umfassend Kieselsäureester, Silane, Polysilane, Organosilanole, Disiloxane, Oligosiloxane, Polysiloxane, Carbosilane, Polycarbosilane, Carbosiloxane, Polycarbosiloxane, Polysilylendisiloxane.

5. Hydrophobierendes, in Wasser redispergierbares Additiv nach Anspruch 1 bis 4, **dadurch gekennzeichnet, dass** als Komponente b2) ein oder mehrere Organosiliciumverbindungen enthalten sind, aus der Gruppe umfassend Kieselsäureester Si (OR') 4, Tetraorganosilane SiR₄, Organoorganoxysilane SiRₙ(OR')₄₋ₙ mit n = 1 bis 3, Polysilane der allgemeinen Formel R₃Si(SiR₂)ₙSiR₃ mit n = 0 bis 500, Organosilanole SiRₙ(OH)₄₋ₙ, Di-, Oligo- und Polsiloxane aus Einheiten der allgemeinen Formel R_{c}H_{d}Si(OR-)ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkenylreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann.

6. Hydrophobierendes, in Wasser redispergierbares Additiv nach Anspruch 1 bis 5, **dadurch gekennzeichnet, dass** als Komponente a) ein oder mehrere Schutzkolloide enthalten sind, aus der Gruppe umfassend
teilverseifte oder vollverseifte Polyvinylalkohole mit einem Hydrolysegrad von 80 bis 100 Mol-% und einer Höpplerviskosität, in 4 %-iger wässriger Lösung, von 1 bis 30 mPas, sowie teilverseifte oder vollverseifte, hydrophob modifizierte Polyvinylalkohole mit einem Hydrolysegrad von 80 bis 100 Mol-% und einer Höpplerviskosität, in 4 %-iger wässriger Lösung, von 1 bis 30 mPas.

7. Hydrophobierendes, in Wasser redispergierbares Additiv nach Anspruch 6, **dadurch gekennzeichnet, dass** als hydrophob modifizierte Polyvinylalkohole teilverseifte oder vollverseifte Copolymerisate von Vinylacetat eingesetzt werden, mit einem oder mehreren hydrophoben Comonomeren aus der Gruppe umfassend Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate, Vinylchlorid, Vinylalkylether, alpha-Olefine mit 2 bis 12 C-Atomen.

8. Hydrophobierendes, in Wasser redispergierbares Additiv nach Anspruch 6, **dadurch gekennzeichnet, dass** als Komponente a) ein oder mehrere Schutzkolloide enthalten sind, aus der Gruppe umfassend
teilverseifte Polyvinylalkohole mit einem Hydrolysegrad von 85 bis 94 Mol-% und einer Höpplerviskosität, in 4 %-iger wässriger Lösung, von 3 bis 15 mPas, sowie teilverseifte oder vollverseifte Copolymerisate von Vinylacetat mit Isopropenylacetat mit einem Hydrolysegrad von 95 bis 100 Mol-%.

9. Hydrophobierendes, in Wasser redispergierbares Additiv nach Anspruch 1 bis 8, **dadurch gekennzeichnet, dass** es kombiniert wird, mit einem oder mehreren, in Wasser redispergierbaren Polymerpulvern auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

10. Verfahren zur Herstellung eines hydrophobierenden, in Wasser redispergierbaren Additivs auf Basis von Fettsäuren sowie deren Derivate gemäß Anspruch 1 bis 9, enthaltend
a) 30 bis 95 Gew.-% ein oder mehrere, wasserlösliche Schutzkolloide,
b) 5 bis 70 Gew.-% ein oder mehrere Verbindungen aus der Gruppe umfassend
b1) Fettsäuren und Fettsäurederivate, die unter alkalischen Bedingungen Fettsäure oder das entsprechende Fettsäureanion freisetzen, gegebenenfalls in Kombination mit
b2) einer oder mehreren Organosilicium-Verbindungen, und
c) 0 bis 30 Gew.-% Antiblockmittel,
wobei die Angaben in Gew.-% auf das Gesamtgewicht des Additivs bezogen sind, und sich auf 100 Gew.-% aufaddieren, **dadurch gekennzeichnet, dass** die Komponente b) in eine wässrige Lösung des Schutzkolloids a) eingerührt und diese anschließend getrocknet wird.

11. Verwendung der hydrophobierenden Additive nach Anspruch 1 bis 9 in bauchemischen Produkten, gegebenenfalls in Verbindung mit hydraulisch abbindenden Bindemitteln wie Zementen oder Wasserglas, oder in Gips-haltigen Massen, Kalk-haltigen Massen, oder zementfreien und Kunststoff-gebundenen Massen, für die Herstellung von Bauklebern, Putzen, Spachtelmassen, Fussbodenspachtelmassen, Verlaufsmassen, Dichtschlämmen, Fugenmörtel und Farben.

## Claims

1. Hydrophobicizing, water-redispersible additive based on fatty acids and their derivatives comprising
a) from 30 to 95% by weight of one or more watersoluble protective colloids,
b) from 5 to 70% by weight of one or more compounds from the group consisting of
b1) fatty acids and fatty acid derivatives which, under alkaline conditions, liberate fatty acid or liberate the corresponding fatty acid anion,
where appropriate in combination with
b2) one or more organosilicon compounds, and
c) from 0 to 30% by weight of antiblocking agents, the data in % by weight being based on the total weight of the additive and giving 100% by weight in total, **characterized in that** the additive is obtained by stiring said component b) into an aqueous solution of said protective colloid a) and then drying said solution.

2. Hydrophobicizing, water-redispersible additive according to claim 1, **characterized in that** one or more components b1) are present from the group consisting of fatty acids having from 8 to 22 carbon atoms, their metal soaps, their amides, and also their esters with monohydric alcohols having from 1 to 14 carbon atoms, with glycol, with polyglycol, with polyalkylene glycol, with glycerol, with mono-, di- or triethanolamine, with monosaccharides.

3. Hydrophobicizing, water-redispersible additive according to claim 1 or 2, **characterized in that** the component b1) present comprises one or more fatty acid esters from the group consisting of
the C₁-C₁₄-alkyl esters and -alkylaryl esters of branched and unbranched, saturated and unsaturated fatty acids each having from 8 to 22 carbon atoms,
the mono-, di-, and polyglycol esters of branched and unbranched, saturated and unsaturated fatty acids each having from 8 to 22 carbon atoms,
the mono- and diesters of polyglycols and/or of polyalkylene glycols having up to 20 oxyalkylene units with branched and unbranched, saturated and unsaturated fatty acids each having from 8 to 22 carbon atoms,
the mono-, di- and triesters of glycerol with branched and unbranched, saturated and unsaturated fatty acids each having from 8 to 22 carbon atoms,
the mono-, di- and triesters of mono-, di- and triethanolamine with branched and unbranched, saturated and unsaturated fatty acids each having from 8 to 22 carbon atoms,
the esters of sorbitol and mannitol with branched and unbranched, saturated and unsaturated fatty acids each having from 8 to 22 carbon atoms.

4. Hydrophobicizing, water-redispersible additive according to any of claims 1 to 3, **characterized in that** the component b2) present comprises one or more organosilicon compounds from the group consisting of silicic esters, silanes, polysilanes, organosilanols, disiloxanes, oligosiloxanes, polysiloxanes, carbosilanes, polycarbosilanes, carbosiloxanes, polycarbosiloxanes, polysilylenedisiloxanes.

5. Hydrophobicizing, water-redispersible additive according to any one of claims 1 to 4, **characterized in that** the component b2) present comprises one or more organosilicon compounds from the group consisting of silicic esters Si(OR')₄, tetraorganosilanes SiR₄, organoorganoxysilanes SiRₙ(OR')₄₋ₙ, where n = from 1 to 3, polysilanes of the general formula R₃Si(SiR₂)ₙSiR₃, where n = from 0 to 500, organosilanols SiRₙ(OH)₄₋ₙ, di-, oligo- and polysiloxanes composed of units of the general formula R_{c}H_{d}Si (OR' )ₑ(OH)_{f}O_{(4-c-d-e-f)/2}, where c = from 0 to 3, d = from 0 to 1, e = from 0 to 3, f = from 0 to 3 and c+d+e+f is not more than 3.5 per unit, where each R is identical or different and is a branched or unbranched alkyl radical having from 1 to 22 carbon atoms, cycloalkyl radical having from 3 to 10 carbon atoms, alkenyl radical having from 2 to 4 carbon atoms, or else aryl, aralkyl or alkylaryl radical having from 6 to 18 carbon atoms, and R' is identical or different alkyl radicals and alkoxyalkylene radicals each having from 1 to 4 carbon atoms, and where the radicals R and R' may also have substitution by halogens, such as Cl, by ether, thioether, ester, amide, nitrile, hydroxy, amine, carboxy, sulfonic acid, carboxylic anhydride or carbonyl groups, and where in the case of the polysilanes R can also have the meaning OR'.

6. Hydrophobicizing, water-redispersible additive according to any of claims 1 to 5, **characterized in that** the component a) present comprises one or more protective colloids from the group consisting of partially hydrolyzed or fully hydrolyzed polyvinyl alcohols with a degree of hydrolysis of from 80 to 100 mol% and with a Höppler viscosity of from 1 to 30 mPas in 4% strength aqueous solution, and also partially hydrolyzed or fully hydrolyzed, hydrophobically modified polyvinyl alcohols with a degree of hydrolysis of from 80 to 100 mol% and with a Höppler viscosity of from 1 to 30 mPas in 4% strength aqueous solution.

7. Hydrophobicizing, water-redispersible additive according to claim 6, **characterized in that** the hydrophobically modified polyvinyl alcohols used comprise partially hydrolyzed or fully hydrolyzed copolymers of vinyl acetate with one or more hydrophobic comonomers from the group consisting of isopropenyl acetate, vinyl pivalate, vinyl ethylhexanoate, vinyl esters of saturated alpha-branched monocarboxylic acids having 5 or from 9 to 11 carbon atoms, dialkyl maleates and dialkyl fumarates, vinyl chloride, vinyl alkyl ethers, alpha-olefins having from 2 to 12 carbon atoms.

8. Hydrophobicizing, water-redispersible additive according to claim 6, **characterized in that** the component a) present comprises one or more protective colloids from the group consisting of partially hydrolyzed polyvinyl alcohols with a degree of hydrolysis of from 85 to 94 mol% and with a Höppler viscosity of from 3 to 15 mPas in 4% strength aqueous solution, and also partially hydrolyzed or fully hydrolyzed copolymers of vinyl acetate with isopropenyl acetate with a degree of hydrolysis of from 95 to 100 mol%.

9. Hydrophobicizing, water-redispersible additive according to any of claims 1 to 8, **characterized in that** it is combined with one or more water-redispersible polymer powders based on one or more monomers from the group consisting of vinyl esters of unbranched or branched alkanecarboxylic acids having from 1 to 15 carbon atoms, methacrylic esters and acrylic esters of alcohols having from 1 to 15 carbon atoms, vinylaromatics, olefins, dienes and vinyl halides.

10. Process for preparing a hydrophobicizing, water-redispersible additive based on fatty acids and their derivatives according to any of claims 1 to 9, comprising
a) from 30 to 95% by weight of one or more watersoluble protective colloids,
b) from 5 to 70% by weight of one or more compounds from the group consisting of
b1) fatty acids and fatty acid derivatives which, under alkaline conditions, liberate fatty acid or liberate the corresponding fatty acid anion,
where appropriate in combination with
b2) one or more organosilicon compounds, and
c) from 0 to 30% by weight of antiblocking agents, the data in % by weight being based on the total weight of the additive and giving 100% by weight in total, **characterized in that** component b) is stirred into an aqueous solution of the protective colloid a) and then said solution is dried.

11. Use of a hydrophobicizing additive according to any of claims 1 to 9 in construction chemistry products, where appropriate in association with hydraulically setting binders, such as cements or waterglass, or in gypsum-containing compositions, in lime-containing compositions, or in cement-free and polymer-bonded compositions, for the production of construction adhesives, renders, trowelling compounds, floor-filling compositions, levelling compositions, sealing slurries, jointing mortars and paints.

## Revendications

1. Additif redispersable dans l'eau, hydrophobant, à base d'acides gras et de leurs dérivés, contenant :
a) 30 à 95% en poids d'un ou plusieurs colloïde(s) protecteur(s) hydrosoluble(s),
b) 5 à 70% en poids d'un ou plusieurs composé(s) appartenant au groupe comprenant :
b1) des acides gras et des dérivés d'acides gras qui libèrent, dans des conditions alcalines, l'acide gras ou l'anion d'acide gras correspondant,
le cas échéant en combinaison avec
b2) un ou plusieurs composé(s) organosilicium, et
c) 0 à 30% en poids d'agent antibloquant,
les indications en % en poids se rapportant au poids total de l'additif et s'additionnant pour donner 100%,
**caractérisé en ce qu'**on obtient l'additif en délayant le composant b) dans une solution aqueuse du colloïde protecteur a), puis en le séchant.

2. Additif redispersable dans l'eau, hydrophobant, selon la revendication 1, **caractérisé en ce qu'**il contient, comme composant b1), un ou plusieurs composé(s) appartenant au groupe comprenant les acides gras comportant 8 à 22 atomes de carbone, leurs savons métalliques, leurs amides ainsi que leurs esters avec les mono-alcools comportant 1 à 14 atome(s) de carbone, avec le glycol, avec un polyglycol, avec un polyalkylèneglycol, avec le glycérol, avec la mono-, di- ou triéthanolamine, avec les monosaccharides.

3. Additif redispersable dans l'eau, hydrophobant, selon la revendication 1 ou 2, **caractérisé en ce qu'**il contient comme composant b1) un ou plusieurs ester(s) d'acides gras appartenant au groupe comprenant
les esters d'alkyle et les esters d'alkylaryle en C₁ à C₁₄ d'acides gras saturés et insaturés, ramifiés et non ramifiés, comportant à chaque fois 8 à 22 atomes de carbone,
les esters de mono-, di- et polyglycols d'acides gras saturés et insaturés, ramifiés et non ramifiés, comportant à chaque fois 8 à 22 atomes de carbone,
les mono- et di-esters de polyglycols et/ou de polyalkylèneglycols comportant jusqu'à 20 unités d'oxyalkylènes avec des acides gras saturés et insaturés, ramifiés et non ramifiés, comportant à chaque fois 8 à 22 atomes de carbone,
les mono-, di- et tri-esters d'acides gras du glycérol avec des acides gras saturés et insaturés, ramifiés et non ramifiés, comportant à chaque fois 8 à 22 atomes de carbone,
les mono-, di- et tri-esters d'acides gras de mono-, di- et tri-éthanolamines avec des acides gras saturés et insaturés, ramifiés et non ramifiés, comportant à chaque fois 8 à 22 atomes de carbone,
les esters d'acides gras de sorbite et de mannite avec des acides gras saturés et insaturés, ramifiés et non ramifiés, comportant à chaque fois 8 à 22 atomes de carbone.

4. Additif redispersable dans l'eau, hydrophobant, selon l'une quelconque des revendications 1 à 3, **caractérisé en ce que**, s'y trouve(nt) contenu(s) comme composant b2) un ou plusieurs composé(s) organosilicium appartenant au groupe comprenant les esters d'acide silicique, les silanes, les polysilanes, les organosilanols, les disiloxanes, les oligosiloxanes, les polysiloxanes, les carbosilanes, les polycarbosilanes, les carbosiloxanes, les polycarbosiloxanes, les polysilylènedisiloxanes.

5. Additif redispersable dans l'eau, hydrophobant selon l'une quelconque des revendications 1 à 4, **caractérisé en ce que**, s'y trouve(nt) contenu(s), comme composant b2), un ou plusieurs composé(s) organosilicium appartenant au groupe comprenant les esters d'acide silicique Si(OR')₄, les tétraorganosilanes SiR₄, les organoorganoxysilanes SiRₙ(OR')₄₋ₙ avec n= 1 à 3, les polysilanes de formule générale R₃Si (SiR₂)ₙSiR₃ avec n = 0 à 500, les organosilanols SiRₙ(OH)₄₋ₙ, les di-, oligo- et polysiloxanes constitués d'unités de formule générale R_{c}H_{d}Si (OR')ₑ (OH) _{f}O_{(4-c-d-e-f)/2} avec c = 0 à 3, d= 0 à 1, e = 0 à 3, f = 0 à 3 et la somme c+d+e+f représentant par unité au maximum 3,5, R étant à chaque fois identique ou différent et représentant des radicaux alkyle ramifiés ou non ramifiés comportant 1 à 22 atome(s) de carbone, des radicaux cycloalkyle comportant 3 à 10 atomes de carbone, des radicaux alcényle comportant 2 à 4 atomes de carbone, ainsi que des radicaux aryle, aralkyle, alkylaryle comportant 6 à 18 atomes de carbone, et R' représentant des radicaux alkyle et alcoxyalkylène identiques ou différents, comportant à chaque fois 1 à 4 atome(s) de carbone, les radicaux R et R' pouvant également être substitués par des halogènes comme Cl, par des groupes éther, thioéther, ester, amide, nitrile, hydroxyle, amine, carboxyle, acide sulfonique, anhydride d'acide carboxylique et carbonyle, et pouvant aussi avoir, dans le cas des polysilanes R également la signification OR'.

6. Additif redispersable dans l'eau, hydrophobant, selon l'une quelconque des revendications 1 à 5, **caractérisé en ce que**, s'y trouve(nt) contenus(s), comme composant a), un ou plusieurs colloïde(s) protecteur(s) appartenant au groupe comprenant les alcools polyvinyliques partiellement ou entièrement saponifiés, d'un degré d'hydrolyse de 80 à 100% en mole et d'une viscosité Höppler, en solution aqueuse à 4%, de 1 à 30 mPas, ainsi que les alcools polyvinyliques modifiés pour être rendus hydrophobes, partiellement ou entièrement saponifiés, d'un degré d'hydrolyse de 80 à 100% en mole et d'une viscosité Hôppler, en solution aqueuse à 4%, de 1 à 30 mPas.

7. Additif redispersable dans l'eau, hydrophobant, selon la revendication 6, **caractérisé en ce qu'**on utilise, comme alcool polyvinylique modifié pour être rendu hydrophobe, des copolymérisats partiellement ou entièrement saponifiés d'acétate de vinyle avec un ou plusieurs comonomère(s) hydrophobe(s) appartenant au groupe comprenant l'acétate d'isopropényle, le pivalate de vinyle, l'hexanoate de vinyléthyle, les esters vinyliques d'acides monocarboxyliques ramifiés en position alpha, saturés, comportant 5 ou 9 à 11 atomes de carbone, les maléïnates de dialkyle et les fumarates de dialkyle, le chlorure de vinyle, les éthers de vinylalkyle, les alpha-oléfines comportant 2 à 12 atomes de carbone.

8. Additif redispersable dans l'eau, hydrophobant, selon la revendication 6, **caractérisé en ce que** s'y trouve(nt) contenu(s), comme composant a), un ou plusieurs colloïde(s) protecteur(s) appartenant au groupe comprenant les alcools polyvinyliques partiellement saponifiés d'un degré d'hydrolyse de 85 à 94% en mole et d'une viscosité Hôppler, en solution aqueuse à 4%, de 3 à 15 mPas, ainsi que les copolymérisats partiellement ou entièrement saponifiés d'acétate de vinyle avec de l'acétate d'isopropényle d'un degré d'hydrolyse de 95 à 100% en mole.

9. Additif redispersable dans l'eau, hydrophobant, selon l'une quelconque des revendications 1 à 8, **caractérisé en ce qu'**il est combiné avec une ou plusieurs poudre(s) de polymère redispersable (s) dans l'eau à base d'un ou plusieurs monomère(s) appartenant au groupe comprenant les esters de vinyle d'acides alkylcarboxyliques non ramifiés ou ramifiés comportant 1 à 15 atome(s) de carbone, les esters d'acide méthacrylique et les esters d'acide acrylique d'alcools comportant 1 à 15 atome(s) de carbone, les composés vinylaromatiques, les oléfines, les diènes et les halogénures de vinyle.

10. Procédé pour la fabrication d'un additif redispersable dans l'eau, hydrophobant, à base d'acides gras et de leurs dérivés selon l'une quelconque des revendications 1 à 9, comportant :
a) 30 à 95% en poids d'un ou plusieurs colloïde(s) protecteur(s) hydrosoluble(s),
b) 5 à 70% en poids d'un ou plusieurs composé(s) appartenant au groupe comprenant :
b1) des acides gras et des dérivés d'acides gras qui libèrent, dans des conditions alcalines, l'acide gras ou l'anion d'acide gras correspondant, le cas échéant en combinaison avec
b2) un ou plusieurs composé(s) organosilicium, et
c) 0 à 30% en poids d'agent antibloquant,
les indications en % en poids se rapportant au poids total de l'additif et s'additionnant pour donner 100%,
**caractérisé en ce que** le composant b) est délayé dans une solution aqueuse du colloïde protecteur a) et est ensuite séché.

11. Utilisation des additifs hydrophobants selon l'une quelconque des revendications 1 à 9, dans les produits chimiques pour la construction, le cas échéant en liaison avec des liants à prise hydraulique comme les ciments ou le silicate de sodium, ou dans des masses contenant du plâtre, des masses contenant de la chaux, ou des masses exemptes de ciment et liées avec des plastiques, pour la fabrication de colles pour le bâtiment, crépis, mastics, masses pour revêtements de sol, masses à étalement, pâtes d'obturation, mortiers pour joints et peintures.
